# EUROPÄISCHE PATENTSCHRIFT

(11) **EP 1 263 117 B1**
(45) Veröffentlichungstag und Bekanntmachung des Hinweises auf die Patenterteilung: **20.07.2005**
(21) Anmeldenummer: 02011145.6
(22) Anmeldetag: 21.05.2002
(51) Int. Cl.: H02K 3/04, H02K 3/12, H02K 3/28, H02K 3/50

(54) **Verfahren zur Herstellung einer Ankerwicklung**
Manufacturing Method of an Armature Winding
Procédé de fabrication d'un enroulement d'induit

(30) Priorität: 21.05.2001 DE 10124946
(43) Veröffentlichungstag der Anmeldung: 04.12.2002
(73) Patentinhaber: Binder, Reiner, 75210 Keltern (DE)
(72) Erfinder: Binder, Reiner, 75210 Keltern (DE)
(74) Vertreter: Lasch, Hartmut Dipl.-Ing.

(56) Entgegenhaltungen:
- US-A- 1 796 422
- US-A- 5 804 902
- PATENT ABSTRACTS OF JAPAN vol. 011, no. 088 (E-490), 18. März 1987 (1987-03-18) & JP 61 240832 A (HITACHI LTD), 27. Oktober 1986 (1986-10-27)
- PATENT ABSTRACTS OF JAPAN vol. 1996, no. 12, 26. Dezember 1996 (1996-12-26) -& JP 08 205441 A (HITACHI LTD), 9. August 1996 (1996-08-09)

## Beschreibung

Die Erfindung betrifft ein Verfahren zur Herstellung einer Ankerwicklung eines Elektromotors aus einem Drahtmaterial mit im wesentlichen rechtwinklig miteinander verbundenen Wicklungselementen aus Metall, wobei jeweils gegenüberliegende Wicklungselemente endseitig durch jeweils gegenüberliegende Wicklungselemente in Form von Rechteck-Flachteilen miteinander verbunden sind.

Derartige Ankerwicklungen sind bekannt und kommen beispielsweise bei Asynchronmotoren zum Einsatz. Sie werden aus abgelängten Drahtstücken und ausgestanzten Blechteilen hergestellt, wobei die Drahtstücke und die Blechteile jeweils alternierend senkrecht angeordnet und endseitig miteinander verschweißt werden, so daß jeweils gegenüberliegende Wicklungselemente der Ankerwicklung von den Drahtstücken gebildet sind, die jeweils durch die einander gegenüberliegenden Blechteile endseitig miteinander verbunden sind. Die fertige Ankerwicklung ist folglich von wendelförmigem Aufbau und weist in Umfangsrichtung alternierend angeordnete Wicklungselemente auf, die einerseits von den gestanzten Blechteilen, andererseits von den abgelängten Drahtstücken gebildet sind.

Nachteilig ist zum einen die beim Ausstanzen der Blechteile anfallende erhebliche Menge an Ausschußmaterial, zum anderen ist die Herstellung der Ankerwicklung aufgrund der vielen Schweißvorgänge insbesondere in handhabungstechnischer Hinsicht aufwendig und teuer.

Die US 1 796 422 A beschreibt eine Ankerwicklung, welche gänzlich aus Rechteck-Flachteilen gebildet ist. Dabei sind mehrere, jeweils ein Winkelstück bildende Wicklungselemente einstückig ausgebildet und endseitig miteinander verbunden, insbesondere verschweißt. Zwar läßt sich auf diese Weise die Anzahl an Schweißvorgängen vermindern, doch ist die Herstellung der durch mehrfaches Umbiegen einer stabartigen Lamelle erhaltenen, im wesentlichen L-förmigen Winkelstücke der Ankerwicklung aufwendig und zeitintensiv. Überdies fällt beim Ausstanzen der Lamellen noch mehr Ausschußmaterial an, da die gesamte Ankerwicklung aus den flachen Lamellen gebildet ist.

Der Erfindung liegt die Aufgabe zugrunde, ein einfaches und kostengünstiges Verfahren zur Herstellung einer Ankerwicklung eines Elektromotors aus einem Drahtmaterial vorzuschlagen, welches ein Anfallen von Ausschußmaterial weitestgehend verhindert.

Erfindungsgemäß wird diese Aufgabe mit einem Verfahren der eingangs genannten Art gelöst, welches durch folgende Schritte gekennzeichnet ist :
- Ablängen des Drahtmaterials zu Drahtstücken;
- Biegen der Drahtstücke unter Bildung von wenigstens zwei Schenkel aufweisenden Winkelstücken;
- Quetschen wenigstens eines Schenkels der Winkelstücke bis zumindest zur Fließgrenze des Drahtmaterials;
- Beschneiden des gequetschten Schenkels der Winkelstücke unter Bildung eines endseitig mit dem anderen Schenkel desselben verbundenen Rechteck-Flachteils;
- endseitiges Verbinden jeweils des anderen endständigen Schenkel wenigstens eines Winkelstücks mit dem endständigen Rechteck-Flachteil wenigstens eines weiteren Winkelstücks oder mit einem separaten Wicklungselement, insbesondere einem Rechteck-Flachteil, unter Bildung der Ankerwicklung.

Die Erfindung zeichnet sich durch eine völlige Abkehr von den herkömmlichen Verfahren zur Herstellung einer gattungsgemäßen Ankerwicklung aus, indem sämtliche Wicitlungselemente der Ankerwicklung aus dem Drahtmaterial hergestellt werden. Hierbei werden die Drahtstücke zunächst unter Bildung von zwei oder mehrere Schenkel aufweisenden Winkelstücken bis zumindest zur Fließgrenze des Drahtmaterials gequetscht und der gequetschte Schenkel der Winkelstücke unter Bildung eines endseitig mit dem anderen Schenkel der Winkelstücke verbundenen Rechteck-Flachteils beschnitten. Der andere endständige Schenkel jeweils eines Winkelstücks wird schließlich mit dem derart erzeugten endständigen Rechteck-Flachteil jeweils eines weiteren Winkelstücks oder einem z.B. aus demselben Drahtmaterial gefertigten Rechteck-Flachteil unter Bildung der Ankerwicklung verbunden.

Die Erfindung macht somit ein Ausstanzen der als Flachteile ausgebildeten Wicklungselemente der Ankerwicklung entbehrlich, was in einer erheblichen Verringerung an Ausschußmaterial resultiert. So entspricht die beim Beschneiden der gequetschten Schenkel der Winkelstücke anfallende Menge an Ausschußmaterial nur etwa 30% des beim Ausstanzen entsprechender Blechteile anfallenden Ausschusses. Ferner sind zur Herstellung der Ankerwicklung aufgrund der einstückigen Ausbildung wenigstens zweier benachbarter Wicklungselemente gegenüber dem Stand der Technik weniger Schweißvorgänge erforderlich, was die Durchführung des erfindungsgemäßen Verfahrens vereinfacht und insbesondere die Herstellungskosten der Ankerwicklung reduziert.

Eine bevorzugte Ausführung sieht vor, daß die Drahtstücke zu im wesentlichen L-förmigen Winkelstücken gebogen werden, der eine Schenkel der L-förmigen Winkelstücke gequetscht und zu dem Rechteck-Flachteil beschnitten wird und jeweils das Rechteck-Flachteil wenigstens eines L-förmigen Winkelstücks endseitig mit dem anderen Schenkel wenigstens eines weiteren L-förmigen Winkelstücks unter Bildung der Ankerwi cklung verbunden wird. Eine Umfangswicklung der solchermaßen hergestellten Ankerwicklung besteht dann aus zwei endseitig miteinander verbundenen L-förmigen Winkelstücken.

Gemäß einer anderen bevorzugten Ausführung ist vorgesehen, daß die Drahtstücke zu im wesentlichen rechteckförmigen Winkelstücken gebogen, jeweils zwei gegenüberliegende Schenkel der rechteckförmigen Winkelstücke gequetscht und zu jeweils einem Rechteck-Flachteil beschnitten werden und jeweils das endständige Rechteck-Flachteil wenigstens eines rechteckförmigen Winkelstücks endseitig mit dem anderen endständigen Schenkel wenigstens eines weiteren rechteckförmigen Winkels tücks unter Bildung der Ankerwicklung verbunden wird. In diesem Fall weist eine Umfangswicklung der solchermaßen hergestellten Ankerwicklung ein rechteckförmiges Winkelstück auf, welches endseitig mit einem weiteren oder mehreren derartiger Winkel stücke verbunden ist.

Eine dritte bevorzugte Ausführung sieht vor, daß die. Drahtstücke zu im wesentlichen U-förmigen Winkelstücken gebogen werden, der mittlere Schenkel der U-förmigen Winkelstücke gequetscht und zu dem Rechteck-Flachteil beschnitten wird und wenigstens ein separates Wicklungselement in Form eines Rechteck-Flachteils endseitig mit wenigstens einem anderen Schenkel des U-förmigen Winkelstücks unter Bildung der Ankerwicklung verbunden wird. Eine Umfangswicklung der auf diese Weise erzeugten Ankerwicklung besteht dann aus einer aus dem U- förmigen Winkelstück und dem separaten Rechteck-Flachteil gebildeten Einheit, welche endseitig mit einer weiteren oder mehreren solcher Einheiten verbunden ist.

Als Ausgangsmaterial können Drahtmaterialien mit im wesentlichen rechteckförmigem oder auch rundem Querschnitt eingesetzt werden. Falls im letztgenannten Fall bei den zwischen den als Flachteile ausgebildeten Wicklungselementen angeordneten, diese verbindenden Wicklungselementen ein rechteckförmiger Querschnitt erwünscht ist, so wird der Querschnitt zumindest der nicht zur Ausbildung eines Rechteck-Flachteils vorgesehenen Abschnitte des Drahtmaterials zu einem im wesentlichen rechteckigen Querschnitt umgeformt. Hierbei kann entweder das eingesetzte Drahtmaterial oder können die abgelängten Drahtstücke einer Querschnittsumformung unterzogen werden. Ferner ist es insbesondere bei der Verfahrensvariante zur Herstellung L - förmiger Winkelstücke denkbar, daß der Querschnitt des nicht zur Ausbildung eines Rechteck-Flachteils vorgesehene Schenkel der Winkelstücke nach Biegen derselben umgeformt wird.

Die Winkelstücke werden vorzugsweise durch Warmumformung gebogen.

Um die Geometrie, insbesondere die Dicke, der Rechteck - Flachteile während der Herstellung zu kontrollieren und auf diese Weise jeglichen Ausschuß zu vermeiden, werden die Flachteile bevorzugt durch mehrstufiges Pressen gequetscht. Ferner ist auf diese Weise eine einfache und reproduzierbare Variation der Geometrie der Flachteile möglich.

Um für einen Ausgleich des Materialverlustes an den Biegeradien der Winkelstücke sorgen zu können, wird bzw. werden vorteilhafterweise zunächst der mit dem anderen Schenkel bzw. die mit den anderen Schenkeln verbundene(n) Abschnitt (e) der zur Ausbildung als Rechteck-Flachteil vorgesehenen Schenkel und sodann diese(r) über seine (ihre) gesamte Länge zu dem (den) Rechteck-Flachteil(en) gequetscht.

In Weiterbildung ist vorgesehen, daß jeweils der endständige Schenkel der Winkelstücke an seinem dem Rechteck-Flachteil abgewandten Ende in einer zu der Ebene des Rechteck-Flachteils parallelen Ebene abgeflacht wird. Das abgeflachte Ende dieses Schenkels dient dann zum Festlegen des Winkelstücks an dem endständigen Rechteck-Flachteil eines weiteren Winkelstücks. Ferner kann das endständige Rechteck-Flachteil der Winkelstücke an seinem dem anderen Schenkel abgewandten Ende mit einer Ausnehmung zum Festlegen des endständigen Schenkels eines weiteren Winkelstücks versehen werden, wobei die Geometrie der Ausnehmung des Rechteck-Flachteils zweckmäßig dem abgeflachten Ende des anderen Schenkels des Winkelstücks angepaßt wird.

Wie bereits angedeutet, werden die Winkelstücke vorzugsweise endseitig miteinander bzw. die Winkelstücke endseitig mit den separaten Rechteck-Flachteilen verschweißt, insbesondere punktverschweißt.

Bei einer mittels eines Verfahrens der vorgenannten Art hergestellte Ankerwicklung eines Elektromotors mit im wesentlichen rechtwinklig miteinander verbundenen Wicklungselementen aus Metall sind jeweils gegenüberliegende Wicklungselemente aus einem Drahtmaterial endseitig durch jeweils gegenüberliegende Wicklungselemente in Form von Rechteck-Flachteilen miteinander verbunden und sind wenigstens zwei, ein Winkelstück bildende Wicklungselemente einstückig ausgebildet und endseitig mit wenigstens einem weiteren solchen Winkelstück oder mit einem separaten Wicklungselement, insbesondere einem Rechteck-Flachteil, verbunden. Die Wicklungselemente in Form von Rechteck-Flachteilen sind dabei von gequetschten Drahtstücken gebildet, indem jeweils wenigstens ein Schenkel der Winkelstücke gequetscht ist.

Wie bereits erwähnt, können die einstückig ausgebildeten Winkelstücke bevorzugt im wesentlichen L-förmig, im wesentlichen rechteckförmig oder im wesentlichen U-förmig ausgebildet und z.B. endseitig miteinander bzw. mit den separaten Rechteck-Flachteilen verschweißt, insbesondere punktverschweißt, sein.

Nachstehend ist die Erfindung anhand von Ausführungsbeispielen unter Bezugnahme auf die Zeichnungen näher erläutert. Dabei zeigen:
- Figur 1: eine perspektivische Ansicht einer Ankerwicklung eines Elektromotors;
- Figur 2: verschiedene Verfahrensstufen zur Herstellung eines Winkelstücks der Ankerwicklung gemäß Fig. 1 und
- Figur 3 und 4: alternative Ausführungsformen eines Winkelstücks.

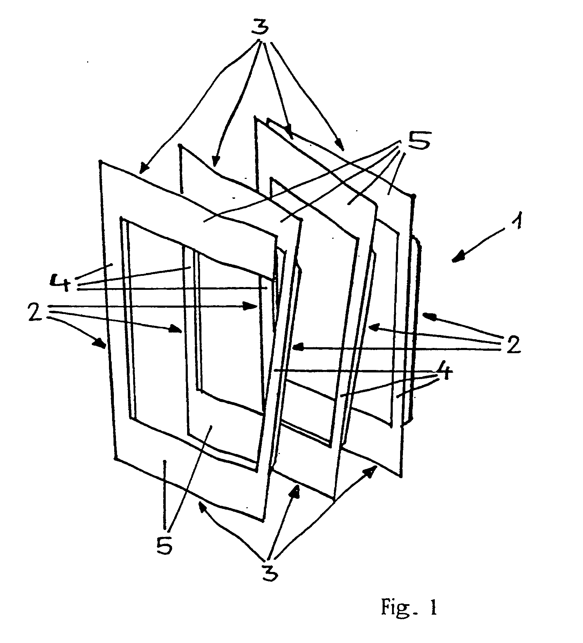

Fig. 1 zeigt eine schematische Ansicht einer Ankerwicklung 1 eines Elektromotors (nicht dargestellt). Die Ankerwicklung 1 ist von wendelförmigem Aufbau und weist etwa rechtwinklig miteinander verbundene Wicklungselemente 2, 3 aus Metall auf, von denen die jeweils gegenüberliegenden Wicklungselemente 2 von Drahtstücken 4 gebildet sind, die bei dem gezeigten Ausführungsbeispiel einen im wesentlichen rechteckigen Querschnitt aufweisen. Die jeweils gegenüberliegenden Wicklungselemente 3 sind von Rechteck-Flachteilen 5 gebildet, wobei die Drahtstücke 4 und die Rechteck-Flachteile 5 in Umfangsrichtung der Ankerwicklung 1 alternierend angeordnet und die Drahtstücke 4 mit den Rechteck-Flachteilen 5 jeweils endseitig im wesentlichen rechtwinklig verbunden sind.

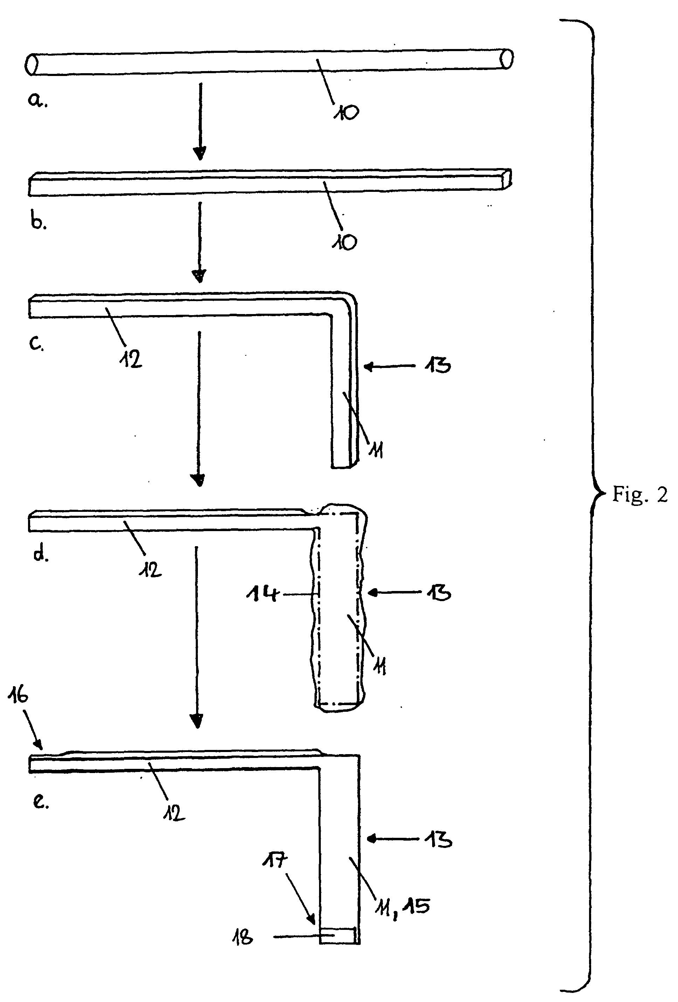

In der Fig. 2 ist ein Verfahrensschema zur Herstellung der Ankerwicklung 1 gemäß Fig. 1 dargestellt. Ein Drahtmaterial mit rundem Querschnitt wird zu Drahtstücken 10 abgelängt (Fig. 2a) und der Querschnitt der Drahtstücke 10 oder auch des Ausgangsmaterial zu einem im wesentlichen rechteckigen Querschnitt umgeformt (Fig. 2b). Sodann werden die Drahtstücke 10 insbesondere durch Warmumformung unter Bildung eines z.B. zwei Schenkel 11, 12 aufweisenden L- förmigen Winkelstücks 13 gebogen (Fig. 2c). Anschließend wird der Schenkel 11 des Winkelstücks 13 durch mehrstufiges Pressen bis zu der gewünschten Dicke gequetscht, wobei zunächst der dem Schenkel 12 zugewandte Abschnitt des Schenkels 11 gequetscht und letzterer erst anschließend über seine gesamte Länge gequetscht wird, um für einen Ausgleich des Materialverlustes am Biegeradius zu sorgen. Beim Pressen des Schenkels 11 wird das Drahtmaterial bis über seine Fließgrenze hinaus beansprucht (Fig. 2d). Schließlich wird der gequetschte Schenkel 11 des Winkelstücks 13 entlang einer in Fig. 2d strichpunktiert dargestellten Linie 14 unter Bildung eines endseitig mit dem anderen Schenkel 12 verbundenen Rechteck-Flachteils 15 beschnitten (Fig. 2e). Das Zuschneiden des Rechteck-Flachteils 15 kann beispielsweise mittels eines in die zum Quetschen des Schenkels 11 des Winkelstücks 13 vorgesehene Presse integrierten Schneidewerkzeuges durchgeführt werden.

Ferner wird der Schenkel 12 des Winkelstücks 13 an seinem dem Rechteck-Flachteil 15 abgewandten Ende 16 in einer zu der Ebene des Rechteck-Flachteils 15 parallelen Ebene abgeflacht, um ihn an dem dem Schenkel 12 abgewandten Ende 17 des Rechteck-Flachteils 15 eines weiteren Winkelstücks 13 festzulegen, z.B. zu verschweißen, verlöten oder dergleichen. Das Ende 17 des Rechteck-Flachteils 15 wird zum selben Zweck mit einer Ausnehmung 18 versehen, die das abgeflachte Ende 16 eines weiteren Winkelstücks 13 aufnimmt.

Zur Herstellung der Ankerwicklung 1 gemäß Fig. 1 wird jeweils das Ende 18 des Rechteck-Flachteils 15 der Winkelstücke 13 mit dem abgeflachten Ende 16 des Schenkels 12 weiterer Winkelstücke 13 im wesentlichen rechtwinklig verschweißt, insbesondere punktverschweißt, so daß sich der wendelförmige Aufbau der Ankerwicklung 1 ergibt (Fig. 1). Aufgrund der Ausbildung jeweils zweier benachbarter Wieklungselemente 2, 3 aus einem einzigen Drahtstück 10 (Fig. 2) sind zur Herstellung der Ankerwicklung 1 weniger Schweißvorgänge als bei den herkömmlichen Verfahren erforderlich und wird insbesondere die anfallende Menge an Ausschußmaterial im Vergleich zu gestanzten Rechteck-Flachteilen um etwa 70% verringert.

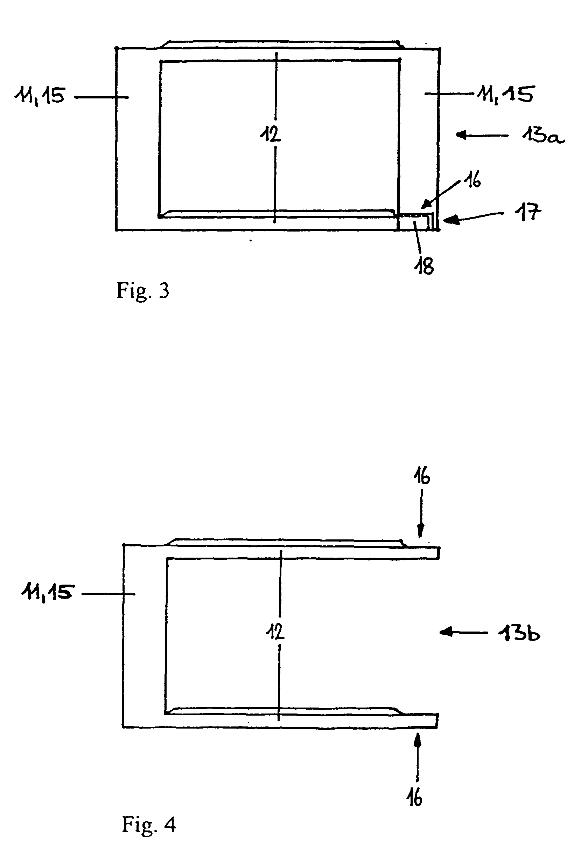

Fig. 3 ist eine zu dem L-förmigen Winkelstück 13 gemäß Fig. 2e alternative Ausführungsform eines rechteckförmigen Winkelstücks 13a entnehmbar. Das Winkelstück 13a unterscheidet sich von dem Winkelstück 13 der Fig. 2e im wesentlichen dadurch, daß es zwei gegenüberliegende Schenkel 12 aus einem Drahtstück aufweist, die an ihrem in Fig. 3 linken Ende durch ein Rechteck-Flachteil 15 miteinander verbunden sind. An dem in Fig. 3 rechten Ende des oberen Schenkels 12 ist ein weiteres - endständiges - Rechteck-Flachteil 15 angeordnet, dessen freies Ende 17 in Zeichnungsebene oberhalb dem freien Ende 16 des in Fig. 3 unteren endständigen Schenkels 12 des Winkelstücks 13a angeordnet ist. Die Herstellung des Winkelstücks 13a entspricht im wesentlichen dem Verfahrensschema nach Fig. 2, wobei die abgelängten Drahtstücke 10 (Fig. 2b) jedoch zu den rechteckförmigen Winkelstücken 13a gebogen, jeweils zwei gegenüberliegende Schenkel 11, 12 der rechteckförmigen Winkelstücke 13a gequetscht und zu den Rechteck - Flachteilen 15 beschnitten werden. Im Falle einer aus mehreren solcher Winkelstücke 13a aufgebauten Ankerwicklung kann die Anzahl an Schweißvorgängen im Vergleich zu einer aus L-förmigen Winkelstücken 13 (Fig. 2e) aufgebauten Ankerwicklung um die Hälfte reduziert werden.

In der Fig. 4 ist eine weitere zu dem L-förmigen Winkelstück 13 gemäß Fig. 2c alternative Ausführungsform eines U-förmigen Winkelstücks 13b gezeigt, welches entsprechend dem in der Fig. 3 dargestellten Winkelstück 13a zwei gegenüberliegende Schenkel 12 aus einem Drahtstück aufweist. Die Schenkel 12 sind an ihren in Fig. 4 linken Ende durch ein Rechteck-Flachteil 15 miteinander verbunden, während das in Fig. 4 rechte freie Ende 16 jedes Schenkels 12 abgeflacht ist, um es mit einem (nicht gezeigten) separaten Rechteck-Flachteil mit dem Rechteck-Flachteil 15 des Winkelstücks 13b etwa entsprechenden Abmessungen zu verbinden. Im Falle einer aus mehreren solcher über separate Rechteck-Flachteile verbundener Winkelstücke 13b aufgebauten Ankerwicklung entspricht die Anzahl an Schweißvorgängen derjenigen der Ausführungsform gemäß Fig. 2.

## Patentansprüche

1. Verfahren zur Herstellung einer Ankerwicklung (1) eines Elektromotors aus einem Drahtmaterial, **gekennzeichnet durch** folgende Schritte:
- Ablängen des Drahtmaterials zu Drahtstücken (10) ;
- Biegen der Drahtstücke (10) unter Bildung von wenigstens zwei Schenkel (11, 12) aufweisenden Winkelstücken (13, 13a, 13b);
- Quetschen wenigstens eines Schenkels (11) der Winkelstücke (13, 13a, 13b) bis zumindest zur Fließgrenze des Drahtmaterials;
- Beschneiden des gequetschten Schenkels (11) der Winkelstücke (13, 13a, 13b) unter Bildung eines endseitig mit dem anderen Schenkel (12) desselben verbundenen Rechteck-Flachteils (15);
- endseitiges Verbinden jeweils des anderen endständigen Schenkel (12) wenigstens eines Winkelstücks (13, 13a, 13b) mit dem endständigen Rechteck-Flachteil (15) wenigstens eines weiteren Winkelstücks (13, 13a) oder mit einem separaten Wicklungselement (2, 3), insbesondere einem Rechteck-Flachteil, unter Bildung der Ankerwicklung (1).

2. Verfahren nach Anspruch 1, **dadurch gekennzeichnet, daß** die Drahtstücke (10) zu im wesentlichen L-förmigen Winkelstücken (13) gebogen werden, der eine Schenkel (11) der L-förmigen Winkelstücke (13) gequetscht und zu dem Rechteck-Flachteil (15) beschnitten wird und jeweils das Rechteck-Flachteil (15) wenigstens eines L-förmigen Winkelstücks (13) endseitig mit dem anderen Schenkel (12) wenigstens eines weiteren L-förmigen Winkelstücks (13) unter Bildung der Ankerwicklung (1) verbunden wird.

3. Verfahren nach Anspruch 1, **dadurch gekennzeichnet, daß** die Drahtstücke (10) zu im wesentlichen rechteckförmigen Winkelstücken (13a) gebogen, jeweils zwei gegenüberliegende Schenkel (11, 12) der rechteckförmigen Winkelstücke (13a) gequetscht und zu jeweils einem Rechteck-Flachteil (15) beschnitten werden und jeweils das endständige Rechteck-Flachteil (15) wenigstens eines rechteckförmigen Winkelstücks (13a) endseitig mit dem anderen endständigen Schenkel (12) wenigstens eines weiteren rechteckförmigen Winkelstücks (13a) unter Bildung der Ankerwicklung (1) verbunden wird.

4. Verfahren nach Anspruch 1, **dadurch gekennzeichnet, daß** die Drahtstücke (10) zu im wesentlichen U-förmigen Winkelstücken (13b) gebogen werden, der mittlere Schenkel (11) der U-förmigen Winkelstücke (13b) gequetscht und zu dem Rechteck-Flachteil (15) beschnitten wird und wenigstens ein separates Wicklungselement in Form eines Rechteck-Flachteils endseitig mit wenigstens einem anderen Schenkel (12) des U-förmigen Winkelstücks (13b) unter Bildung der Ankerwicklung (1) verbunden wird.

5. Verfahren nach einem der Ansprüche 1 bis 4, **dadurch gekennzeichnet, daß** ein Drahtmaterial mit im wesentlichen rechteckförmigem Querschnitt eingesetzt wird.

6. Verfahren nach einem der Ansprüche 1 bis 4, **dadurch gekennzeichnet, daß** ein Drahtmaterial mit im wesentlichen runden Querschnitt eingesetzt wird.

7. Verfahren nach Anspruch 6, **dadurch gekennzeichnet daß** der Querschnitt zumindest der nicht zur Ausbildung eines Rechteck-Flachteils (15) vorgesehenen Abschnitte des Drahtmaterials zu einem im wesentlichen rechteckigen Querschnitt umgeformt werden.

8. Verfahren nach einem der Ansprüche 1 bis 7, **dadurch gekennzeichnet, daß** die Winkelstücke (13, 13a, 13b) durch Warmumformung gebogen werden.

9. Verfahren nach einem der Ansprüche 1 bis 8, **dadurch gekennzeichnet, daß** die Rechteck-Flachteile (15) durch mehrstufiges Pressen gequetscht werden.

10. Verfahren nach Anspruch 9, **dadurch gekennzeichnet, daß** zunächst der mit dem anderen Schenkel (12) verbundene Abschnitt des Schenkels (11) und sodann dieser über seine gesamte Länge zu dem Rechteck-Flachteil (15) gequetscht wird.

11. Verfahren nach einem der Ansprüche 1 bis 10, **dadurch gekennzeichnet, daß** jeweils der endständige Schenkel (12) der Winkelstücke (13, 13a, 13b) an seinem dem Rechteck-Flachteil (15) abgewandten Ende (16) in einer zu der Ebene des Rechteck-Flachteils (15) parallelen Ebene abgeflacht wird.

12. Verfahren nach einem der Ansprüche 1 bis 11, **dadurch gekennzeichnet, daß** jeweils das endständige Rechteck-Flachteil (15) der Winkelstücke (13, 13a) an seinem dem anderen Schenkel (12) abgewandten Ende (17) mit einer Ausnehmung (18) zum Festlegen des endständigen Schenkels (12) eines weiteren Winkelstücks (13, 13a) versehen wird.

13. Verfahren nach einem der Ansprüche 1 bis 12, **dadurch gekennzeichnet, daß** die Winkelstücke (13, 13a) endseitig miteinander bzw. die Winkelstücke (13b) endseitig mit den separaten Rechteck-Flachteilen verschweißt, insbesondere punktverschweißt, werden.

## Claims

1. Method for the manufacture of an armature winding (1) of an electric motor from a wire material, **characterized by** the following steps:
- cutting the wire material to form wire pieces (10),
- bending the wire pieces (10), accompanied by the formation of angle pieces (13, 13a, 13b) having at least two legs (11, 12),
- squeezing at least one leg (11) of the angle pieces (13, 13a, 13b) at least to the yield point of the wire material,
- cutting off the squeezed leg (11) of the angle pieces (13, 13a, 13b), accompanied by the formation of a rectangular flat part (15) terminally connected to the other leg (12) thereof,
- terminal connection of in each case the other end leg (12) of at least one angle piece (13, 13a, 13b) to the terminal rectangular flat part (15) of at least one further angle piece (13, 13a) or with a separate winding element (2, 3), particularly a rectangular flat part, accompanied by the formation of the armature winding (1).

2. Method according to claim 1, **characterized in that** the wire pieces (10) are bent to form substantially L-shaped angle pieces (13), one leg (11) of the L-shaped angle pieces (13) is squeezed and cut to form the rectangular flat part (15) and in each case the rectangular flat part (15) of at least one L-shaped angle piece (13) is terminally connected to the other leg (12) of at least one further L-shaped angle piece (13), accompanied by the formation of the armature winding (1).

3. Method according to claim 1, **characterized in that** the wire pieces (10) are bent to form substantially rectangular angle pieces (13a), in each case two facing legs (11, 12) of the rectangular angle pieces (13a) are squeezed and cut to in each case form a rectangular flat part (15) and in each case the end rectangular flat part (15) of at least one rectangular angle piece (13a) is terminally connected to the other end leg (12) of at least one further rectangular angle piece (13a), accompanied by the formation of the armature winding (1).

4. Method according to claim 1, **characterized in that** the wire pieces (10) are bent to form substantially U-shaped angle pieces (13b), the middle leg (11) of the U-shaped angle pieces (13b) is squeezed and cut to form the rectangular flat part (15) and at least one separate winding element in the form of a rectangular flat part is terminally connected to at least one other leg (12) of the U-shaped angle piece (13b), accompanied by the formation of the armature winding (1).

5. Method according to one of the claims 1 to 4, **characterized in that** a wire material with a substantially rectangular cross-section is used.

6. Method according to one of the claims 1 to 4, **characterized in that** a wire material with a substantially round cross-section is used.

7. Method according to claim 6, **characterized in that** the cross-section of the wire material portions not provided for the formation of a rectangular flat part (15) are shaped to give a substantially rectangular cross-section.

8. Method according to one of the claims 1 to 7, **characterized in that** the angle pieces (13, 13a, 13b) are bent by hot forming.

9. Method according to one of the claims 1 to 8, **characterized in that** the rectangular flat parts (15) are squeezed by multistage pressing.

10. Method according to claim 9, **characterized in that** initially the portion of the leg (11) connected to the other leg (12) is squeezed and then the former is squeezed over its entire length to form the rectangular flat part (15).

11. Method according to one of the claims 1 to 10, **characterized in that** in each case the end leg (12) of the angle pieces (13, 13a, 13b) is flattened at its end (16) remote from the rectangular flat part (15) in a plane parallel to the plane of the rectangular flat part (15).

12. Method according to one of the claims 1 to 11, **characterized in that** in each case the end rectangular flat part (15) of the angle pieces (13, 13a) is provided at its end (17) remote from the other leg (12) with a recess (18) for securing the end leg (12) of a further angle piece (13, 13a).

13. Method according to one of the claims 1 to 12, **characterized in that** the angle pieces (13, 13a) are terminally interconnected or the angle pieces (13b) are terminally welded, particularly spot welded to the separate rectangular flat parts.

## Revendications

1. Procédé de fabrication d'un enroulement d'induit (1) d'un moteur électrique à partir d'un matériau filaire métallique, **caractérisé par** les étapes suivantes :
. découpage à longueur du fil métallique en tronçons de fil (10) ;
. pliage des tronçons de fil (10) pour former des pièces coudées (13, 13a, 13b) présentant au moins deux branches (11, 12) ;
. compression-écrasement d'au moins une branche (11) des pièces coudées (13, 13a, 13b) au moins jusqu'à la limite apparente d'élasticité du fil métallique ;
. ébarbage de la branche (11) aplatie des pièces coudées (13, 13a, 13b) pour former une pièce plate rectangulaire (15) relié par son extrémité à l'autre branche (12) de celle-ci ;
. raccordement d'extrémité pour chaque autre branche terminale (12) d'au moins une pièce coudée (13, 13a, 13b) à la pièce plate rectangulaire (15) terminale d'au moins une autre pièce coudée (13, 13a) ou à une section d'enroulement séparée (2,3), en particulier une pièce plate rectangulaire, pour former l'enroulement d'induit (1).

2. Procédé selon la revendication 1, **caractérisé en ce que** les tronçons de fil métallique (10) sont pliés pour obtenir des pièces coudées (13) de forme sensiblement en L, **en ce que** l'on aplatit l'une des branches (11) des pièces coudées (13) en forme de L et qu'on l'ébarbe pour obtenir la pièce plate rectangulaire (15) et **en ce que** chaque pièce plate rectangulaire (15) d'au moins une des pièces coudées (13) en forme de L est reliée par son extrémité à l'autre branche (12) d'au moins une autre pièce coudée (13) en forme de L pour former l'enroulement d'induit (1).

3. Procédé selon la revendication 1, **caractérisé en ce que** les tronçons de fil métallique (10) sont pliés pour obtenir des pièces coudées (13a) sensiblement rectangulaires, **en ce qu'**à chaque fois deux branches (11, 12) opposées des pièces coudées (13a) rectangulaires sont aplaties et ébarbées chacune pour obtenir une pièce plate rectangulaire (15) et **en ce qu'**à chaque fois la pièce plate rectangulaire (15) terminale d'au moins une pièce coudée (13a) rectangulaire est reliée par son extrémité à une autre branche (12) terminale d'au moins une autre pièce coudée (13a) rectangulaire pour former l'enroulement d'induit (1).

4. Procédé selon la revendication 1, **caractérisé en ce que** les tronçons de fil métallique (10) sont pliés pour obtenir des pièces coudées (13b) sensiblement en forme de U, **en ce que** la branche médiane (11) de la pièce coudée (13b) est aplatie et ébarbée pour former la pièce plate rectangulaire (15) et **en ce qu'**au moins une section d'enroulement séparée sous la forme d'une pièce plate rectangulaire est reliée par son extrémité à au moins une autre branche (12) de la pièce coudée (13b) en forme de U pour former l'enroulement d'induit (1).

5. Procédé selon l'une quelconque des revendications 1 à 4, **caractérisé en ce que** l'on utilise un matériau filaire métallique à section sensiblement rectangulaire.

6. Procédé selon l'une quelconque des revendications 1 à 4, **caractérisé en ce que** l'on utilise un matériau filaire métallique à section sensiblement circulaire.

7. Procédé selon la revendication 6, **caractérisé en ce que** l'on déforme la section au moins des tronçons de fil métallique non prévus pour former une pièce plate rectangulaire (15) pour obtenir une section sensiblement rectangulaire.

8. Procédé selon l'une quelconque des revendications 1 à 7, **caractérisé en ce que** les pièces coudées (13, 13a, 13b) sont pliées par formage à température modérée.

9. Procédé selon l'une quelconque des revendications 1 à 8, **caractérisé en ce que** les pièces plates rectangulaires (15) sont aplaties par pression graduée.

10. Procédé selon la revendication 9, **caractérisé en ce que** l'on aplatit d'abord la partie de la branche (11) reliée à l'autre branche (12) et **en ce qu'**on l'aplatit ensuite sur toute sa longueur pour former la pièce plate rectangulaire (15).

11. Procédé selon l'une quelconque des revendications 1 à 10, **caractérisé en ce que** la branche (12) terminale de chacune des pièces coudées (13, 13a, 13b) est aplatie à son extrémité (16) opposée à la pièce plate rectangulaire (15) dans un plan parallèle au plan de la pièce plate rectangulaire (15).

12. Procédé selon l'une quelconque des revendications 1 à 11, **caractérisé en ce que** la pièce plate rectangulaire (15) terminale de chacune des pièces coudées (13, 13a) présente à son extrémité opposée à l'autre branche (12) un évidement (18) pour la fixation de la branche terminale d'une autre pièce coudée (13, 13a).

13. Procédé selon l'une quelconque des revendications 1 à 12, **caractérisé en ce que** les pièces coudées (13, I3a) sont soudées entre elles au niveau de leurs extrémités, ou que les pièces coudées (13b) sont soudées au niveau de leurs extrémités aux pièces plates rectangulaires séparées, en particulier par soudage par points.
